Europäisches Patentamt

European Patent Office

Office européen des brevets

(11) Publication number: 0 406 975 A2

# EUROPEAN PATENT APPLICATION

(21) Application number: 90201766.4

(22) Date of filing: 02.07.90

(51) Int. Cl.5: G02F 1/136

(30) Priority: 07.07.89 GB 8915610

(43) Date of publication of application:
09.01.91 Bulletin 91/02

(84) Designated Contracting States:
DE FR GB IT NL

(71) Applicant: PHILIPS ELECTRONIC AND
ASSOCIATED INDUSTRIES LIMITED
Philips House 188 Tottenham Court Road
London W1P 9LE(GB)
(84) DE

Applicant: N.V. Philips' Gloeilampenfabrieken

Groenewoudseweg 1
NL-5621 BA Eindhoven(NL)
(84) DE

(72) Inventor: Harlow, Nicholas Keith, C/o Philips
Research Lab.
Redhill
Surrey RH1 5HA(GB)

(74) Representative: Williamson, Paul Lewis et al
PHILIPS ELECTRONICS Patents and Trade
Marks Department Philips House 188
Tottenham Court Road
London W1P 9LE(GB)

(54) Active matrix-addressed display devices.

(57) An active matrix display device comprises a row and column array of liquid crystal display elements (12) driven by switching and data signals supplied via row and column conductors (R and C) from driver circuits (30 and 32), with at least most display elements each being addressed through two transistors (TA, TB) connected to different row conductors (R) for fault tolerance purposes. The two transistors may be connected for similar reasons to different column conductors. At their ends remote from the driver circuit (30) the row conductors R are interconnected, at least in groups, via respective resistances 40. In the event of a row conductor discontinuity, the broken section is then held at a voltage level determined by either the address signals on other row conductors or a separate voltage source (50) which maintains the transistors connected thereto in their off state. The resistances conveniently may be formed from resistive material deposited on a substrate of the device together with the row conductors and transistors.

FIG.1

## ACTIVE MATRIX-ADDRESSED DISPLAY DEVICES

This invention relates to an active matrix-addressed display device. More particularly, the invention is concerned with an active matrix-addressed liquid crystal display device comprising a row and column array of display elements each having first and second spaced electrodes with liquid crystal therebetween and each being associated with two transistors operable by switching signals to supply data signals to the display elements, and sets of row and column conductors to which switching signals and data signals are applied respectively by row and column driver circuits connected to their ends, with the two transistors of each display element in a row being connected respectively to two different row conductors.

An active matrix-addressed display device of the above kind in which the transistors may be bulk transistors, e.g. MOSFETs, formed on a semiconductor substrate of the device or for large area display devices, TFTs deposited on a glass substrate, is known from GB-A-2115199. This device offers advantages over simpler forms of display devices using a single transistor acting as a switch for each display element. In the simpler forms the source electrodes of all transistors in the same column are connected to a respective one of a set of column conductors to which data signals are applied and the gate electrodes of all transistors in the same row are connected to a respective one of a set of row conductors to which switching (gating) voltages are applied to control switching of the transistors. An electrode of each display element is coupled to the drain of its respective transistor. Row conductors are scanned one at a time so as to turn on all transistors in each row in turn with data signals being applied to the column conductors appropriately in synchronism for each row in turn so as to build up a display, the transistors serving to isolate the display elements in the interval until they are next scanned. The performance of any display element is, therefore, dependent on the proper operation of its respective transistor and address conductors.

With the increasingly larger display areas now being proposed there comes a corresponding increase in the number of display elements, and hence switching transistors, required.

A major problem in making large area display devices is yield. A discontinuity in a row conductor or just defective transistors can render the device unacceptable. Depending on the nature of the defect, even one defective transistor can lead to complete rows or columns of display elements being unusable.

The kind of display device described in GB-A-2115199, having two transistors for each display element which are connected to respective, different, row conductors, offers a degree of fault tolerance. In the particular arrangement described each row conductor is connected to transistors asociated with two adjacent rows of display elements so that, in effect, each row conductor is shared by the two rows of elements. Considering one display element, and assuming both associated transistors and their respective row conductors are not faulty, one transistor operates to load the display element with a data signal voltage during one row address period and thereafter, during a subsequent row address period, the other transistor operates to over-write, almost immediately, the data voltage with the correct data signal voltage. In the event of one transistor or the connection to it proving to be defective and open circuit the device operates in the conventional way as for a single transistor drive. If the other transistor is defective and open circuit the information intended for an adjacent display element is written in this element and not overwritten. Although in the event of a fault a display element may therefore produce the same display effect as another element rather than an effect particularly intended for that element this is hardly perceptible to a viewer and acceptable displays can be produced.

In principle this technique can correct or partially correct for an open circuit in the transistor or a row conductor. However, it has been found that in the event of a row conductor being open circuit at a point along its length, that is, for example, discontinuous, display quality problems can still occur with display elements associated with the section of row conductor beyond its discontinuity.

It is an object of the present invention to provide an active matrix-addressed display device of the above-described kind which offers improved fault tolerance.

According to the present invention, there is provided an active matrix addressed liquid crystal display device of the kind referred to in the opening paragraph which is characterised in that the row conductors are each connected at their end remote from the row driver circuit to a predetermined potential through a resistance.

If, therefore, one of the row conductors should include a discontinuity along its length, then the connection to the predetermined potential ensures that the potential on that line for the section beyond the discontinuity is maintained at a certain level, this level being chosen to be sufficient to maintain the transistors associated with the section in their "off" state. The value of the predetermined potential is suitably chosen for the purpose having regard to the resistance value and the operational characteristics of the transistors. Without such a connection, the section of row conductor beyond the discontinuity is left floating and, due it is thought to transistor leakages particularly between the source and gate for example and possibly also parasitic capacitance, can float to a voltage at which the transistors whose gates are connected thereto are not fully "off", causing the display elements concerned to be loaded with incorrect data signals during successive row address periods to produce erroneous display effects. Such effects have been observed in practice. The invention prevents floating of the row conductor in this manner and hence affords further fault tolerance. The display elements associated with a discontinuous section of row conductor continue to provide acceptable displays by virtue of the operation of the transistors connected to their other associated row conductor.

In order to avoid varying the voltages on the gate of the transistors connected to a row conductor, the value of the resistance is chosen so as to be substantially higher than the resistance of the row conductor. The value of the latter is dependent on the technology used to form the row conductors. Conventionally, row conductors can be of ITO, doped polysilicon, metal such as aluminium or a silicide which have widely differing resistivities.

The resistances are preferably provided together with tthe row address conductors on a common substrate of the device for greatest convenience. The resistances may be formed simultaneously with the row conductors, transistors or element electrodes on the substrate from a deposited layer of resistive material. To this end, the material chosen to constitute the resistances is dependent on the technology employed to fabricate the transistors, element electrodes or address conductors. If, for example, ITO is used for address conductors or display element electrodes, then the resistances can be fabricated from ITO, and formed integrally with the row conductors in the case where these are formed of ITO, for example by definition from a single deposited layer. To provide the necessary resistance value, the resistances may be in the form of strips of less width than the row conductors and which extend in a meandering pattern to minimise their overall length.

For display devices utilising amorphous silicon TFTs as the transistors then conveniently the resistances can be fabricated from amorphous silicon with suitable doping. Undoped amorphous silicon material exposed to the display device's back-light could also be used, taking advantage of the material's photoresistive properties.

In display devices using polysilicon TFTs, with for example metal or silicide row conductors, then similarly the resistances can be fabricated using doped polysilicon material.

In all the above approaches, the provision of the resistances is very simple requiring little or no extra processing apart form appropriate extended phototlithographic definition simultaneously with definition of other standard components of the device.

In one embodiment of the display devices, the sides of the resistances remote from the row conductors are connected to a source of predetermined potential through conductor means. For example, a conductive line may be formed on the substrate extending from each resistance to a common rail to which a voltage is applied via one or more contact pads, this voltage being separate from the signals applied to the row conductors by the driver circuit. This arrangement allows some flexibility in the value of the resistances provided.

In another embodiment the resistances or respective groups of the resistances are interconnected at their sides remote from the row conductors by conductor means whereby the predetermined potential is determined by the instantaneous driving voltages applied to the row conductors by the row driver circuit. The conductor means for example comprises a conductive line, which line can be formed simultaneously with the row conductors. At any given time only one row conductor is supplied with a comparatively high potential, the select voltage, by the row driver circuit when using a conventional drive scheme. All other row conductors are at a low potential, determined by the row driver circuit, sufficient to maintain the transistors coupled to these other row conductors in their "off" condition. By utilising the fact that at any one time the average of the voltages appearing on the row conductors is low then in the event of a row conductor being discontinuous the interconnection between resistances results in a suitably low potential being present on the section of that row conductor isolated from the driver circuit, thus ensuring that the transistors coupled to the section are maintained off.

Although only groups of resistances may be interconnected in this manner for simplicity all the resistances are preferably connected together.

The two transistors associated with each display element may be connected to the same column conductor. However, in a preferred arrangement, the two transistors associated with each display element are connected to respective, different, column conductors as well as respective, different, row conductors, thus providing redundancy should one of the column conductors suffer a discontinuity at some point along its length. With a colour display device in which each one of a group of three adjacent display elements displays a respective one of the three primary colours and in which diagonally adjacent display elements display the same colour component a further benefit is obtained in that if a display element's correct row conductor, column conductor or switching transistor is effectively open circuit the display element will produce, through the operation of its associated second switching transistor, the same display effect as that of the nearest display element of the same colour.

Column conductors may be shared by adjacent columns of display elements or may be associated solely with a respective column of display elements in known ways.

The manner of interconnection of row conductors with rows of display elements may follow any suitable known scheme. In a simple scheme, for example, each row conductor may be connected with, and shared by, respective transistors associated with two adjacent rows of display elements. In another example, the rows of display elements may be arranged in groups of adjacent pairs with each group of two rows being driven via three row conductors associated solely with the group, two of the row conductors being connected to transistors of respective rows of display elements while the intermediate row conductor is shared by both rows of display elements and connected to transistors of both rows of elements. It will be appreciated that suitably modified driving schemes are required depending on the row and column conductor schemes adopted.

Active matrix-addressed liquid crystal display devices in accordance with the invention will now be described, by way of example, with reference to the accompanying drawings, in which:-

Figure 1 is an equivalent circuit diagram of one embodiment of a display device according to the invention showing some of the display elements and their associated addressing transistors and conductors;

Figure 2 is a schematic cross-section through a central region of a typical display element;

Figure 3 is a timing diagram for switching signals supplied to three typical row conductors;

Figure 4 shows the equivalent circuit diagram of a modified form of the display device of Figure 1.

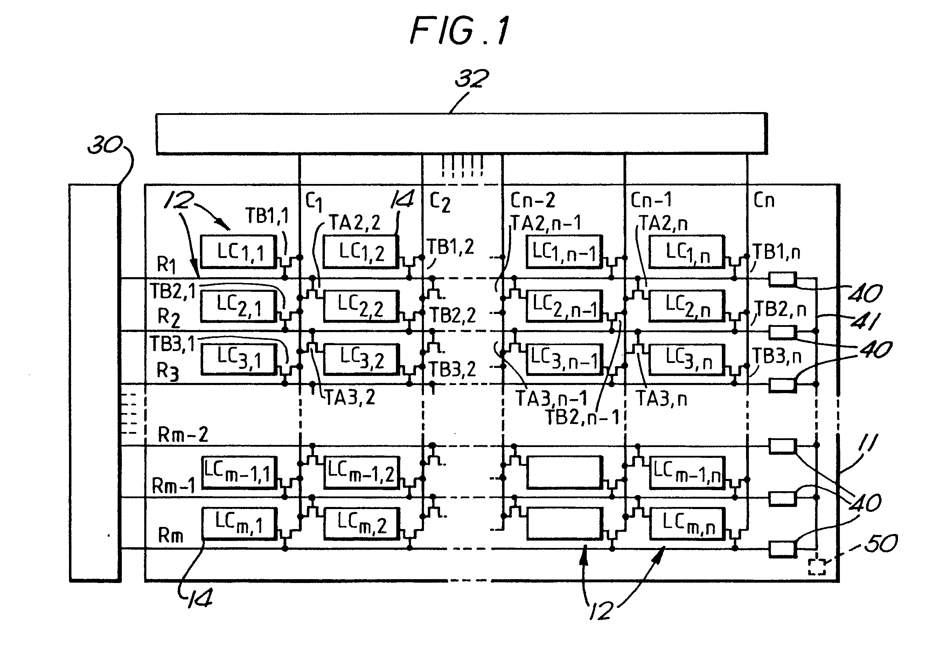

Referring to Figure 1, the active matrix-addressed display device, which is suitable for displaying TV pictures, comprises a display panel 11 having m rows (1 to m) with n horizontally arranged display elements 12 (1 to n) in each row. Only five rows of display elements, rows 1 to 3, m-1, and m, and four elements in each row are shown for clarity. In practice, the total number of display elements (mxn) in the matrix array may be 200,000 or more. The display elements are referenced $LC_{y,x}$ where y and x designate their row and column positions respectively. The display elements are addressed via sets of row and column conductors, here referenced R and C, which extend in spaces between the display elements and which are connected respectively at their ends to row and column driver circuits 30 and 32 providing switching and data signals in the usual manner. For fault tolerance purposes all rows of the display elements except the first are associated with two row conductors. Similarly, all display elements apart from those in the first column are associated with two column conductors. The application of data (video) signals to each of these display elements is controlled by two switching transistors, designated $TA_{y,x}$ and $TB_{y,x}$, connected to respective ones of the pairs of row and column conductors associated with the display element. The display elements of the first row and of the first column, being associated only with a single row conductor and a single column conductor respectively, are, accordingly, associated with a single switching transistor. As such these particular elements do not have the same fault tolerance. However, since display elements at the periphery of the panel are normally masked from view, faults in the operation of these elements will not be visible. For all other rows and columns the switching transistors associated with the display elements of each individual row are connected to a respective common pair of row conductors. Likewise the switching transistors associated with all the display elements in the same column are connected to the same respective common pair of column conductors.

In the particular arrangement shown the row and column conductors, apart from the last, are each associated with, and shared by, respectively two adjacent rows and two adjacent columns of display elements.

The switching transistors in this embodiment comprise TFTs fabricated in conventional manner using amorphous silicon or polysilicon technology. The gate and source terminals of the TFTs are connected to their associated row and column conductors respectively.

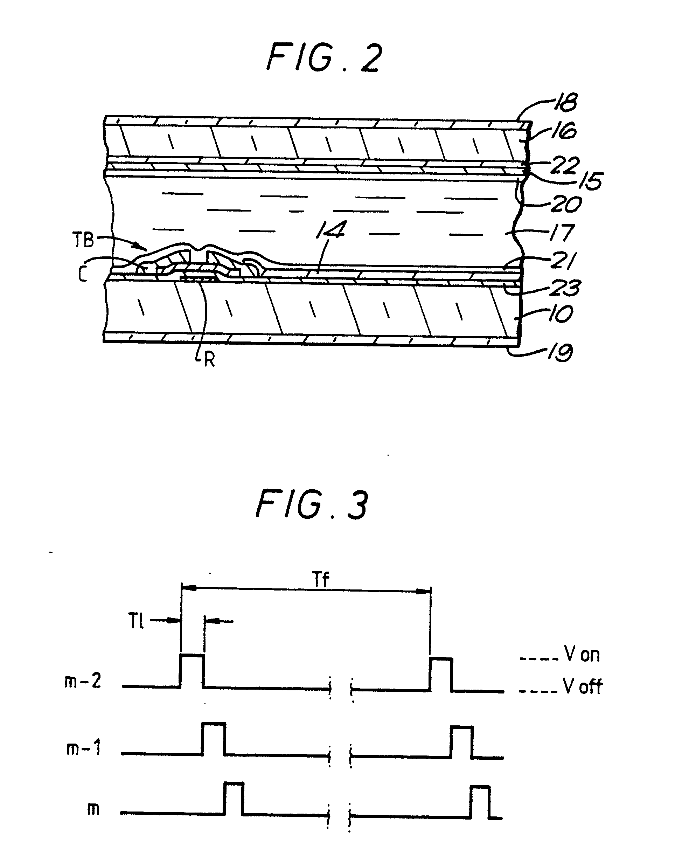

A typical display element 12, as shown in part cross-section in Figure 2, comprises a transparent pad electrode 14, (shown as a simple rectangular electrode in Figure 1), which is carried on a transparent substrate 10 of the display device together with the row and column conductors and the TFTs and which is connected to the drain terminals of its associated two switching transistors, only one of which is visible, and an opposing transparent electrode 15 carried on a second, spaced, transparent substrate 16 with liquid crystal material 17 disposed therebetween. The opposing electrodes of the display elements on the second substrate comprise individual portions of a common counter electrode coextensive with the area occupied by the pad electrodes in the usual way. The two substrates, which may be of glass, are provided with polarising layers 18 and 19 and orientation layers 20 and 21 in conventional manner. The liquid crystal material serves to modulate light transmitted through the display elements according the value of to a data voltage applied thereto with each display element being operable to vary light transmission individually through the device.

For producing a colour display, each display element is registered with a colour filter 22 in known manner with groups of three adjacent display elements each providing a colour triplet. The triplets are arranged such that diagonally adjacent display elements in the array display the same primary colour, either red, green or blue.

Each of the row conductors, $R_1$ to Rn, is connected at its end remote from the driver circuit 30 to a respective resistance 40. The other sides of the resistances 40 are interconnected with one another through a rail 41 extending columnwise.

In operation, the display elements are driven on a row at a time basis by scanning the row conductors R sequentially with a switching signal starting from the uppermost row downwards so as to turn on the switching transistors in each row in turn and by applying data signals to the column conductors as appropriate and in synchronism with the switching signals so as to build up a complete display picture. The row and column driver circuits 30 and 32 providing the switching and data signals are of conventional form. Figure 3 shows the timing relationship of the waveforms supplied by the row driver circuit 30 for a typical group of three consecutive row conductors, in this case the last three. For a TV display, the data signals comprise video information signals and each row of display elements is provided with video information signals corresponding to a TV line. Using one row at a time addressing, each of the groups of switching transistors TAy,x and TBy,x associated with a single row of display elements is switched on for a time period TI during which video information signals are transferred from the column conductors related to those transistors to the display elements. During the remainder of the field period Tf (Tf being approximately equal to m.T1) the transistors are turned off and serve to isolate the display elements from the column conductors.

More precisely, each row of display elements is addressed by scanning two consecutive row conductors. Considering for example the second row (y = 2) of display elements in Figure 1, comprising LC2,1 to LC2,n, a switching signal Von applied to the row conductor R1 serves to turn on the transistors TA2,2 to TA2,n allowing the video information signals then appearing on the column conductors C1 to Cn-1 to be supplied to the display elements LC2,2 to LC2,n respectively. Because the row conductor R1 is connected also to the switching transistors (TB1,1 to TB1,n) for the preceding row of display elements (LC1,1 to LC1,n) these elements are similarly supplied with the corresponding video information voltages. Thereafter, the switching signal Von is removed from the row conductor R1 and a reference voltage signal $V_{off}$, which may be ground or zero volts, is applied which turns off the transistors TA2,2 to TA2,n (and likewise the transistors TB1,1 to TB1,n) thereby isolating the display elements LC2,2 to LC2,n (and LC1,1 to LC1,n respectively). Practically simultaneously, the switching signal Von is applied to row conductor R2 so as to turn on the transistors TB2,1 to TB2,n thereby allowing the video information signals now present on the column conductors C1 to Cn to be supplied to the display elements LC2,1 to LC2,n respectively. The previously loaded video information of these elements is thus overwritten with the values properly intended for these elements. Similarly, the switching signal Von applied to row conductor R2 also causes the transistors TA3,2 to TA3,n of the succeeding display element row to be turned on so that the same video information signals on column conductors C1 to Cn-1 are supplied also to the elements LC3,2 to LC3,n respectively.

Upon subsequently returning the voltage applied to row conductor R2 from Von to Voff, and applying the switching voltage signal Von to the next row conductor R3, the transistors TB2,1 to TB2,n are turned off to isolate the display elements LC2,1 to LC2,n so that the last applied video information signals are retained and, in conjunction with a reference voltage applied to the opposing electrodes of the elements, the desired display effect achieved from the elements.

It is seen, therefore, that within two successive line address periods T1, corresponding to 128 microseconds for a PAL system TV display, the display elements LC2,2 to LC2,n are firstly loaded with respective video information signals applied also to, and intended primarily for, the corresponding but one display element of the preceding row and then loaded with video information signals specifically intended for the display elements of that row. Hence, in the event of one of the transistors TB2,2 to TB2,n being open circuit and preventing the proper video information signal to be supplied to the display element affected, that display element will continue to produce a display effect in accordance with the video information signal loaded via its other transistor. The display element affected will in these circumstances therefore produce a display effect which is substantially the same as that provided by a diagonally adjacent display element of the preceding row. Since diagonally adjacent display elements are arranged to display the same colour the affected display element accordingly reproduces the display effect as its closest display element of the same colour. If a transistor fails short circuit it can be disconnected by laser scribing or the like thus effectively producing an open circuit type failure.

The row conductors R are scanned in turn so that the above-described driving scheme is repeated for each row of display elements in turn, the display effect produced by the elements being maintained until they are next addressed in a subsequent field period.

Thus, for all display elements, apart from those of the first row and column, a voltage is normally written via its transistor TA and then almost immediately over-written with the correct voltage via transistor TB. If a transistor TA or connection to it is open circuit the device operates in the conventional way. If a transistor TB is open circuit the information on an adjacent display element is written in and not overwritten. The "error" would not normally be noticeable.

Considering now the effect of a row conductor R being open circuit, for example having a break, at some point along its length so that one or more transistors connected thereto beyond the break are not able to receive switching signals from the driver circuit 30, the interconnection through resistances of the ends of the row conductors prohibits the possibility of the disconnected section of the row conductor floating to a voltage at which the coupled transistors are not fully off due possibly to transistor leakage and capacitive effects. The disconnected section is held at a sufficiently low voltage, around Voff, to ensure that the coupled transistors are maintained in their "off" condition. The display elements concerned are then driven solely through the transistors connected to their associated other row conductor so that operation of the elements to provide satisfactory display effects is retained. The low voltage is provided by virtue of the fact that at any given time all but one of the row conductors is at a low voltage, Voff, and is determined by the average of the voltages being applied to the other row conductors.

The resistances are needed to avoid interference with the proper operation of other rows of display elements. It is also necessary to avoid varying the voltages at the gates of the transistors connected along the row conductor. To this end, the value of each resistance 40 is chosen to be much higher, around ten times or greater, than that of the row conductor itsef. The resistance of a row conductor is dependent on the technology and material employed in its fabrication. For a display panel of around six inches square, the resistance of a row conductor is typically between 1 kohm (e.g. a metal) and 100 kohm (e.g. polysilicon). The resistances 40 are fabricated as a layer on the substrate 10 in contact with the row conductors. The rail 41 and the respective short lines connecting the resistances 40 to the rail are photolithographically defined simultaneously with the row conductors from the same deposited layer although different conductive materials could be employed for these parts if desired. If possible, the resistances are for convenience also formed from the same material as the row conductors or deposited material used in the fabrication of other components on the substrate 10, such as the transistors or the display element electrodes 14 providing these materials are suitable for the purpose. ITO is commonly used for display element electrodes and sometimes for row conductors as well. In this case, ITO may be used to form the resistances and where the row conductors comprise ITO, the row conductors, resistances 40 and rail 41 may be formed unitarily with one another from a common layer. The resistances themselves would each be in the form of a long narrow strip compared with the row conductors, and arranged in a zig-zag meandering pattern. This material could be used to provide resistance values of up to tens of kohms.

For a display device using polysilicon TFTs as the transistors, polysilicon material can be used to form the resistances using a dopant such as phosphorus. In this case, the row conductors, for example of aluminium or chromium, and the resistances contact one another by overlapping their ends. If doped polysilicon is also used for the row conductors the resistances 40 and rail 41 can again be fabricated unitarily with the row conductors from a common deposited layer. Doped polysilicon can be used to provide resistances up to a few hundred kohms.

Similarly, in another example where amorphous silicon is used in the fabrication of TFTs forming the transistors this material, doped for example with phosphorus, can be used for the resistances with, again, contact being achieved by overlap between the resistance material and the row conductors and the rail 41. Doped amorphous silicon constituting a resistance may be in strip form with a width greater than the row conductor. Alternatively, undoped amorphous silicon may be used which is left unshielded whereby in operation of the device it is exposed to light emitted by the device's backlight causing it to become less resistive so that its very high resistance decreases to a level suitable for its purpose. In both cases resistances with values from a few megohms upwards can be produced.

For display devices employing amorphous silicon and polysilicon TFTs then resistances provided by illuminated undoped amorphous silicon and doped polysilicon respectively are considered advantageous as no extra processing is needed for their creation.

Whilst the above described examples simplify fabrication of the device by forming the additional components necessary, namely the resistances and their interconnections, to provide this additional fault tolerant protection against row conductor discontinuities using materials already required in the fabrication of standard components of the device, it will be appreciated that the resistances for example could instead be formed using other materials. This may be desired if materials employed for the other, standard, components are unsuitable because for example they would require further additional processing.

In this particular embodiment the first row and first column of display elements are each controlled through only one transistor connected to a single row and a single column conductor, namely TB1,1 to TB1,n and TB1,1 to TBm,1 respectively. Should one of these transistors be defective, then the individual element concerned becomes faulty. However, this possibility is not critical as these elements are at the periphery of the display area and would normally be masked from view anyway.

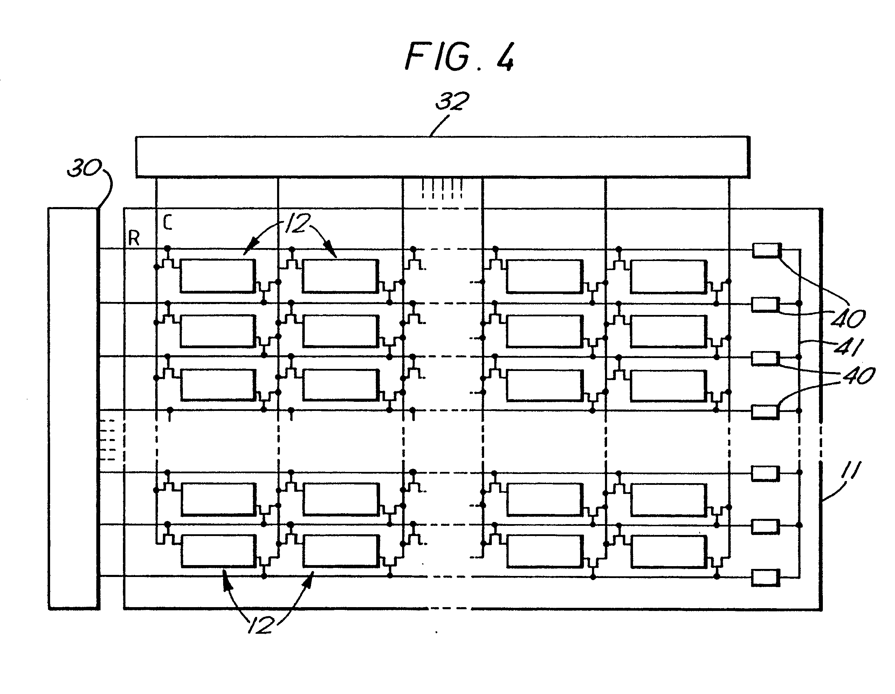

In a modified form of this embodiment of display device, the first row of display elements (apart from LC1,1) are also each associated with two switching transistors in similar manner to the remaining rows. This is achieved by providing an additional row conductor so that the number of row conductors exceeds the number of rows of display elements by one. Moreover, an additional column conductor could be provided which is connected to display elements in the first column via respective additional transistors TA. The equivalent circuit diagram of a display device incorporating these modifications is illustrated in Figure 4.

It should also be appreciated that various modifications are possible to the above described embodiment, for example with regard to the manner in which the potential on a broken row conductor is kept low to ensure connected transistors are held in their off state. Although the resistances 40 are shown in Figure 1 as all being interconnected by the rail 41, they may instead be interconnected in respective groups, the number in each group being chosen bearing in mind, firstly, that at most only one of the row conductors associated will be at the higher voltage Von and, secondly, the requirement to produce a sufficiently low voltage for a broken section of row conductor from the voltages appearing on the other row conductors. Also, rather than merely using the average of the voltages on the row conductors to determine the voltage applied to a broken row conductor section, an external voltage source could be connected to the sides of the resistances 40 remote from the row conductors via one, or more, contact pads formed on the substrate 10 which is interconnected with the resistances. Such a contact pad is shown in broken lines at 50 in Figure 1. In use this pad would be connected to a source of voltage separate from the row drive voltages.

Moreover, different configurations of row and column address conductors could be employed, as are known in the art for fault tolerant display devices using two transistors for each display element. Thus, although in the above described embodiment at least most of the display elements are driven via two transistors which are connected to two different row conductors and two different column conductors the transistors could be arranged instead with each pair of transistors associated with a particular display element being connected to the same column conductor. Also, the column conductors need not be shared by adjacent columns of display elements as described but may instead be uniquely associated with just one column of elements.

Further, a known alternative row conductor configuration may be used in which the rows of display elements are grouped in adjacent pairs with each group being associated with three respective row conductors, these three row conductors not being used for any other row of display elements. Of the three row conductors associated with any one group, two row conductors are connected respectively and solely to the first transistors of the two rows of display elements and the third, intermediate, row conductor is connected to the second transistors of both rows of display elements, and hence shared by both rows. Naturally with such a configuration the drive waveforms applied to the row and column conductors are appropriately modified.

## Claims

1. An active matrix-addressed liquid crystal display device comprising a row and column array of display elements each having first and second spaced electrodes with liquid crystal therebetween and each being associated with two transistors operable by switching signals to supply data signals to the display elements, and sets of row and column conductors to which switching signals and data signals are applied respectively by row and column driver circuits connected to their ends, with the two transistors of each display element in a row being connected respectively to two different row conductors, characterised in that the row conductors are each connected at their end remote from the row driver circuit to a predetermined potential through a resistance.

2. An active matrix-addressed liquid crystal display device according to Claim 1, characterised in that the resistances are provided on a substrate of the device together with the row conductors and transistors.

3. An active matrix-addressed liquid crystal display device according to Claim 2, characterised in that the resistances are formed from a layer of resistive material deposited on the substrate.

4. An active matrix-addressed liquid crystal display device according to Claim 3, characterised in that the resistances comprise ITO material.

5. An active matrix-addressed liquid crystal display device according to Claim 4, characterised in that the row conductors comprise ITO and in that the resistances are formed unitarily with their respective row conductors from a common deposited layer.

6. An active matrix-addressed liquid crystal display device according to Claim 3, characterised in that the transistors comprise polysilicon TFTs and in that the resistances are formed of doped polysilicon material.

7. An active matrix-addressed liquid crystal display device according to Claim 3, characterised in that the transistors comprise amorphous silicon TFTs and in that the resistances are formed of doped amorphous silicon material.

8. An active matrix-addressed liquid crystal display device according to Claim 3, characterised in that the transistors comprise amorphous silicon TFTs and in that the resistances are formed from undoped amorphous silicon material and are exposed to light in operation of the device.

9. An active matrix-addressed liquid crystal display device according to any one of Claims 2 to 8, characterised in that the side of each resistance remote from the row conductor is connected by conductor means to a predetermined voltage source.

10. An active matrix-addressed liquid crystal display device according to Claim 9, characterised in that the conductor means comprises conductive material carried on said substrate and includes one or more contact pads to which a predetermined voltage is applied.

11. An active matrix-addressed liquid crystal display device according to any one of Claims 2 to 8, characterised in that the resistances or respective groups of resistances are interconnected at their sides remote from the row conductors by conductive means whereby said predetermined potential is determined by drive signals applied to the row conductors by the row driver circuit.

12. An active matrix-addressed liquid crystal display device according to Claim 11, characterised in that the conductor means comprises a line of conductive material defined on the substrate which interconnects said sides of the resistances or a respective group of resistances.

FIG.1

EP 0 406 975 A2

# FIG. 2

# FIG. 3

2-Ⅲ-PHB 33569

FIG. 4

EP 0 406 975 A2